# FASCICULE DE BREVET EUROPEEN

(11) **EP 2 576 246 B1**
(45) Date de publication et mention de la délivrance du brevet: **27.08.2014**
(21) Numéro de dépôt: 11722091.3
(22) Date de dépôt: 31.05.2011
(51) Int. Cl.: B60C 11/24, B29D 30/06, B29D 30/66, B29C 33/10, B29C 33/42, B60C 11/04

(54) **ELEMENT MOULANT COMPORTANT UNE PLURALITE DE NERVURES ET AU MOINS UNE ZONE DE MESURE SANS NERVURES ET PNEUMATIQUE MOULÉ À PARTIR DE CET ELEMENT**
FORMELEMENT MIT MEHREREN RIPPEN UND MINDESTENS EINEM RIPPENFREIEN MESSBEREICH UND DAMIT HERGESTELLTER REIFEN
MOULDING ELEMENT COMPRISING A PLURALITY OF RIBS AND AT LEAST ONE RIB-FREE MEASUREMENT ZONE AND TYRE OBTAINED THEREBY

(30) Priorité: 31.05.2010 FR 1054229
(43) Date de publication de la demande: 10.04.2013
(73) Titulaire: Compagnie Générale des Etablissements Michelin, 63000 Clermont-Ferrand (FR); Michelin Recherche et Technique S.A., 1763 Granges-Paccot (CH)
(72) Inventeur: GAY, Didier, F-63040 Clermont-Ferrand Cedex 09 (FR); ROCHE, Joseph, F-63040 Clermont-Ferrand Cedex 09 (FR)
(74) Mandataire: Demaure, Pierre-Yves
(86) Numéro de dépôt international: PCT/EP2011/058917
(87) Numéro de publication internationale: WO 2011/151311

(56) Documents cités:
- EP-A1- 1 987 932
- EP-A1- 2 085 201
- EP-A2- 1 232 843
- WO-A1-00/29228
- GB-A- 1 366 300
- KR-A- 20070 055 872
- SU-A1- 408 833
- US-A- 3 327 570
- US-A1- 2007 006 954

## Description

### DOMAINE DE L'INVENTION

La présente invention concerne le domaine des moules de vulcanisation pour pneumatiques. L'invention est notamment relative aux moules destinés à mouler des pneumatiques neige comportant sur leur bande de roulement un grand nombre de fines rainures.

### ETAT DE LA TECHNIQUE

Il est connu du document EP0378090 de pourvoir une bande de roulement d'un pneumatique neige d'une pluralité d'incisions (« sipe » en anglais).

Les incisions sont des découpures qui s'étendent dans la profondeur de la bande de roulement et qui débouchent sur la surface de roulement en formant des arêtes. Ces arêtes sont particulièrement utiles pour améliorer l'adhérence sur une chaussée enneigée ou verglacée.

Afin d'améliorer d'avantage l'adhérence sur une chaussée enneigée ou verglacée, il est connu du document US2007/0006954 de pourvoir également le pneumatique d'un grand nombre de fines rainures (« fine groove » en anglais) régulièrement réparties dans la bande de roulement. Ces fines rainures débouchent sur la surface de roulement de la bande de roulement et forment des arêtes supplémentaires. Ainsi sur une chaussée enneigée ou verglacée, ce sont à la fois les arêtes des incisions et les arêtes des fines rainures qui vont venir « gratter » la neige ou la glace.

Le document US2007/0006954 divulgue également un moule pour le moulage d'un pneumatique. Généralement, un moule pour pneumatique comprend plusieurs éléments moulants séparés qui par rapprochement relatif délimitent un espace de moulage globalement toroïdal. Afin d'éviter les défauts d'aspect du pneumatique du type faux-rond (« run out » en Anglais), il est nécessaire que le décalage radial entre les différents éléments moulants soit limité une fois ceux-ci rapprochés. Pour éviter ces décalages radiaux, on s'assure de bien maîtriser l'épaisseur des éléments moulants. Pour cela, il est connu de contrôler l'épaisseur des éléments moulants à l'aide d'une machine de mesure tridimensionnelle. La machine de mesure tridimensionnelle comprend une table de support fixe et un palpeur. L'opération de contrôle se déroule de la manière suivante : on place l'élément moulant sur la table de support puis on vient palper à l'aide du palpeur mobile différentes zones de mesure sur l'élément moulant. En venant palper des zones de mesure adéquates, il est possible de déterminer en une pluralité de points, l'épaisseur de l'élément moulant. En comparant ces valeurs d'épaisseur mesurées avec des valeurs d'épaisseur de référence, on peut déterminer si l'élément moulant est conforme ou non conforme.

Un élément moulant pour un moule pour pneumatique comportant une surface de moulage ayant une rugosité est décrit dans la demande de brevet EP 2 085 2011.

Pour déterminer l'épaisseur de l'élément moulant, il est nécessaire de venir palper la surface de moulage de l'élément moulant, c'est-à-dire la surface de l'élément moulant qui va former la surface de roulement de la bande de roulement du pneumatique. Or cette surface de moulage n'est pas complètement lisse puisqu'elle est encombrée par des nervures formant des fines rainures dans la bande de roulement. La présence de ces nervures rend alors plus difficile une détermination précise de l'épaisseur de l'élément moulant par la machine de mesure tridimensionnelle.

Il existe donc un besoin pour améliorer la précision dans la mesure de l'épaisseur d'un élément moulant pourvu d'une pluralité de nervures destinées à mouler des fines rainures dans une bande de roulement d'un pneumatique.

### BREVE DESCRIPTION DE L'INVENTION

L'invention concerne un élément moulant pour un moule pour pneumatique comportant une bande de roulement pourvue d'une pluralité de blocs. Chaque bloc comporte une surface de contact destinée à venir en contact avec une chaussée au cours d'un roulage. L'élément moulant comporte également une surface de moulage pour mouler les surfaces de contact des blocs. La surface de moulage comprend une pluralité de nervures destinées à mouler des fines rainures dans les blocs. Ces nervures ont une hauteur comprise entre 0,005 et 1 mm, une largeur comprise entre 0,01 mm et 0,3 mm et le pas des nervures est compris entre 0,1 et 2 mm. La surface de moulage comporte au moins une zone de mesure sans nervures apte à recevoir des moyens de mesure. Cette zone de mesure a globalement la forme d'un disque dont le diamètre est supérieur à 3 mm.

L'invention consiste donc à prévoir au moins une zone spécifique sur la surface de moulage de l'élément moulant pour effectuer des mesures à l'aide d'un palpeur d'une machine de mesure tridimensionnelle. Cette zone spécifique est dépourvue de nervures et présente une forme adaptée à la forme sphérique du palpeur de la machine et au diamètre de ce palpeur qui est compris entre 1 mm et 2 mm. On garantit ainsi une plus grande facilité pour venir palper l'élément moulant sans rencontrer de nervures. On améliore alors la précision dans la détermination de l'épaisseur de l'élément moulant au niveau de cette zone de mesure.

Dans une variante de réalisation, l'élément moulant comporte deux bords délimitant circonférentiellement la surface de moulage, chacun desdits bords étant apte à entrer en contact avec un bord d'un autre élément moulant. Le centre de la zone de mesure est distant d'au plus 15 mm avec un desdits bords.

Une grande partie du défaut d'aspect de type faux-rond provient de l'existence d'un décalage radial entre les bords d'éléments moulants adjacents. En disposant la zone de mesure à proximité d'un bord de l'élément moulant, on est capable de vérifier la conformité de l'épaisseur de l'élément moulant au niveau de ce bord. Il est alors possible de limiter davantage le défaut d'aspect de type faux-rond.

L'invention concerne également un élément moulant pour un moule pour pneumatique comportant une bande de roulement pourvue d'une pluralité de blocs. Chaque bloc comporte une surface de contact destinée à venir en contact avec une chaussée au cours d'un roulage. L'élément moulant comporte également une surface de moulage pour mouler les surfaces de contact des blocs. Cette surface de moulage a une rugosité comprise entre 0,005 mm et 0,02 mm. La surface de moulage comporte au moins une zone de mesure apte à recevoir des moyens de mesure. La zone de mesure a globalement la forme d'un disque dont le diamètre est supérieur à 3 mm et la zone de mesure présente une rugosité comprise entre 0,002 mm et 0,003 mm.

Il est ainsi possible de remplacer les nervures par un état de surface particulier. Cet état de surface va créer une pluralité de bosses et de creux sur la surface de roulement de la bande de roulement. Ces bosses et ces creux vont améliorer l'adhérence du pneumatique sur une chaussée enneigée ou verglacée. Cependant, l'état de surface particulier de la surface de moulage de l'élément moulant ne permet pas d'effectuer avec précision des mesures par une machine de mesure tridimensionnelle. En prévoyant une zone de mesure de dimensions limitées présentant un meilleur état de surface que le reste de la surface de moulage, on améliore la détermination de l'épaisseur de l'élément moulant.

Un autre objet de l'invention concerne un moule comportant un élément moulant tel que décrit ci-dessus. Un autre objet de l'invention concerne un pneumatique neige moulé et vulcanisé à partir de ce moule.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la figure 1 représente une vue schématique en perspective d'un élément moulant comportant une pluralité de nervures ;
- la figure 2 présente une vue en coupe partielle de la surface de moulage de l'élément moulant de la figure 1 ;
- la figure 3 représente une vue schématique en perspective d'un élément moulant sans nervures présentant un état de surface déterminé.

Dans la description qui va suivre, des éléments sensiblement identiques ou similaires seront désignés par des références identiques.

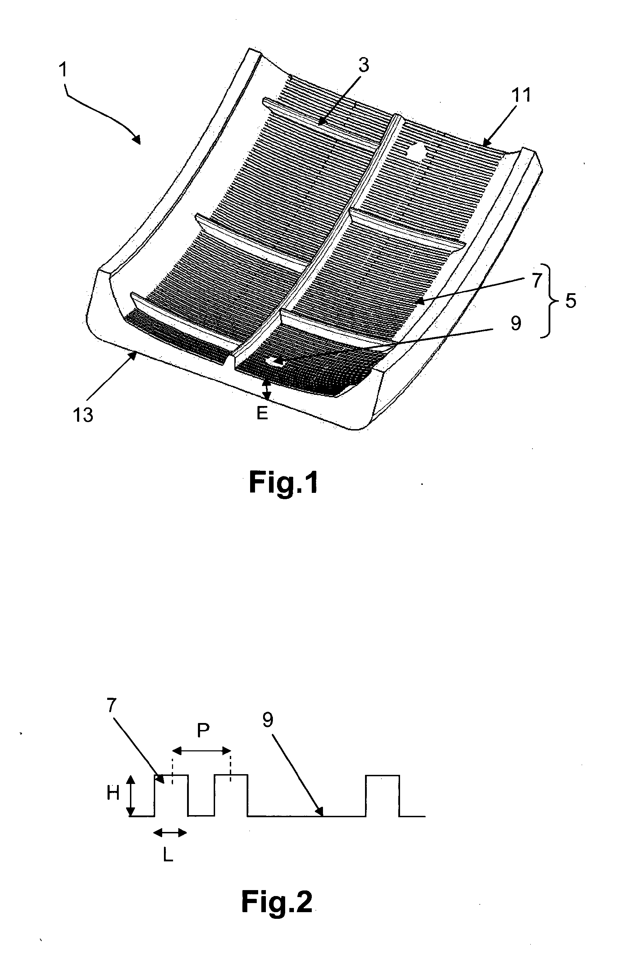

La figure 1 représente une vue schématique en perspective d'un élément moulant selon un premier mode de réalisation de l'invention. L'élément moulant comprend des lamelles 3 et une surface de moulage 5. Les lamelles 3 sont destinées à mouler des rainures dans la bande de roulement d'un pneumatique moulé. Les rainures sont des découpures dont la largeur est supérieure à 2 mm et la hauteur est supérieure à 4 mm. Ces rainures délimitent des blocs de gomme dans la bande de roulement du pneumatique. La surface de moulage 5 est destinée à mouler les surfaces de contact des blocs de la bande de roulement. La surface de contact d'un bloc est la surface qui va venir en contact avec la chaussée au cours d'un roulage.

La surface de moulage 5 comprend ici une pluralité de nervures 7 destinées à mouler de fines rainures dans la bande de roulement. Les nervures sont parallèles entre elles et régulièrement réparties. Plus particulièrement, le pas des nervures est compris entre 0,1 et 2 mm.

La surface de moulage 5 comprend également au moins une zone sans nervures 9 délimitée par des nervures 7. La zone sans nervure est destinée à recevoir des moyens de mesure tel qu'un palpeur d'une machine de mesure tridimensionnelle. La zone sans nervures 9 a globalement la forme d'un disque et le diamètre de ce disque est supérieur à 3 mm. Pour éviter de diminuer les performances du pneumatique sur une chaussée enneigée ou verglacée, l'aire de la zone sans nervures est limitée. Par exemple, l'aire de cette zone est inférieure à 40 mm².

On notera que la zone de mesure 9 est située à proximité d'un bord 11 délimitant circonférentiellement l'élément moulant 1. Plus précisément, le centre de la zone de mesure 9 est situé à une distance inférieure à 15 mm par rapport à ce bord 11. De la même manière, la distance entre le centre de la zone 9 et un plan médian divisant l'élément moulant en deux parties de même largeur transversale est inférieure à 15 mm.

On notera enfin que l'élément moulant est ici en aluminium obtenu par moulage à partir d'une matrice en plâtre.

La figure 2 présente une vue en coupe partielle de la surface de moulage 5 de la figure 1. Sur cette figure, on distingue plus précisément la hauteur H et la largeur L des nervures. La hauteur H des nervures est comprise entre 0,005 et 1 mm et la largeur L des nervures est comprise entre 0,01 mm et 0,3 mm. La section des nervures présente ici une forme rectangulaire. En variante, la section des nervures est différente. Par exemple, la section des nervures peut être carrée, triangulaire, sinusoïdale, trapézoïdale ou en dent de scie.

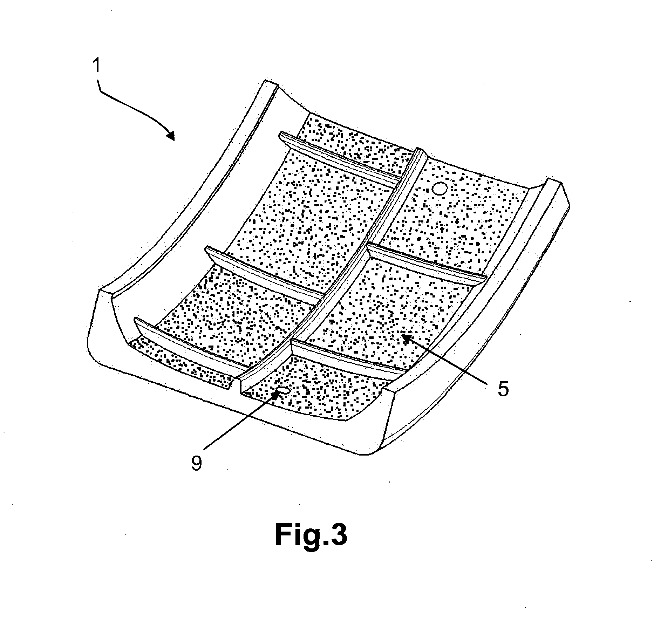

La figure 3 représente une vue en perspective d'un élément moulant 1 selon un autre mode de réalisation. Dans ce mode de réalisation, les nervures sont remplacées par une rugosité Ra particulière. Plus précisément, la surface de moulage 5 présente une rugosité Ra comprise entre 0,005 mm et 0,02 mm. Cette rugosité peut être obtenue par une opération de traitement de surface particulière telle qu'un sablage.

La surface de moulage 5 comprend également au moins une zone de mesure 9 destinée à recevoir des moyens de mesure. La zone de mesure 9 présente une rugosité Ra inférieure au reste de la surface de moulage. La rugosité de la zone de mesure 9 est ici comprise entre 0,002 mm et 0,003 mm. Cette rugosité correspond à l'état de surface initial de l'élément moulant, c'est-à-dire à l'état de surface de l'élément moulant lorsque celui-ci est séparé de la matrice en plâtre. Au cours de l'opération de sablage de la surface de moulage 5, les zones de mesure sont protégées par des pastilles en acier afin que ces zones de mesure conservent leur faible rugosité.

On notera que les mesures de rugosité de la surface de moulage peuvent être effectuées à l'aide d'un appareil de mesure commercialisé sous la dénomination « Marsurf PS1 ». Cet appareil satisfait notamment aux normes ISO 4287 et JIS B 0601.

L'opération de contrôle de l'élément moulant par une machine de mesure tridimensionnelle se déroule selon les étapes suivantes.

Dans une première étape, on vient placer l'élément moulant sur une table de support appartenant à la machine de mesure tridimensionnelle.

Dans une seconde étape, plusieurs mesures sont effectuées sur la surface externe 13 de l'élément moulant, en référence à la figure 1. A partir de ces mesures, la machine de mesure tridimensionnelle est apte à modéliser cette surface externe 13.

Dans une troisième étape, on vient déterminer les coordonnées d'un point appartenant à une zone de mesure 9. En comparant les coordonnées de ce point avec la modélisation de la surface externe 13, la machine de mesure tridimensionnelle est apte à calculer l'épaisseur E de l'élément moulant au niveau de la zone de mesure 9.

L'invention n'est pas limitée aux exemples décrits et représentés et diverses modifications peuvent y être apportées sans sortir de son cadre.

Ainsi, la **figure 1** présente des nervures s'étendant principalement selon une direction transversale. En variante, les nervures peuvent s'étendrent selon une direction oblique, par exemple, en faisant un angle de 45° avec la direction transversale.

En outre, il est possible de prévoir sur la surface de moulage différentes zones nervurées présentant des directions d'extension des nervures différentes.

Enfin, on a représenté sur la **figure 1** deux zones de mesure sans nervures. En variante, le nombre de zones de mesure sans nervures est supérieur à 2. Il est ainsi possible de prévoir plusieurs zones de mesure à proximité d'un même bord afin de mieux déterminer la courbure de l'élément moulant au niveau de ce bord.

## Revendications

1. Elément moulant pour un moule pour pneumatique comportant une bande de roulement pourvue d'une pluralité de blocs, chaque bloc comportant une surface de contact destinée à venir en contact avec une chaussée au cours d'un roulage, ledit élément moulant comportant une surface de moulage (5) pour mouler les surfaces de contact des blocs, ladite surface de moulage comprenant une pluralité de nervures (7) destinées à mouler des fines rainures dans les blocs, lesdites nervures ayant une hauteur (H) comprise entre 0,005 et 1 mm et une largeur (L) comprise entre 0,01 mm et 0,3 mm, le pas (P) des nervures étant compris entre 0,1 et 2 mm, **caractérisé en ce que** la surface de moulage comporte au moins une zone de mesure (9) sans nervures apte à recevoir des moyens de mesure et **en ce que** la zone de mesure a globalement la forme d'un disque dont le diamètre est supérieur à 3 mm.

2. Elément moulant selon la revendication 1, ledit élément moulant comportant deux bords (11) délimitant circonférentiellement la surface de moulage, chacun desdits bords étant apte à entrer en contact avec un bord d'un autre élément moulant, **caractérisé en ce que** le centre de la zone de mesure (9) est distant d'au plus 15 mm avec un desdits bords.

3. Elément moulant pour un moule pour pneumatique comportant une bande de roulement pourvue d'une pluralité de blocs, chaque bloc comportant une surface de contact destinée à venir en contact avec une chaussée au cours d'un roulage, ledit élément moulant comportant une surface de moulage (5) pour mouler les surfaces de contact des blocs, ladite surface de moulage ayant une rugosité (Ra) comprise entre 0,005 mm et 0,02 mm, **caractérisé en ce que** la surface de moulage comporte au moins une zone de mesure (9) apte à recevoir des moyens de mesure, ladite zone de mesure ayant globalement la forme d'un disque dont le diamètre est supérieur à 3 mm et **en ce que** la zone de mesure a une rugosité (Ra) comprise entre 0,002 mm et 0,003 mm.

4. Moule pour la vulcanisation et le moulage d'un pneumatique, **caractérisé en ce que** ledit moule comporte au moins un élément moulant (1) selon l'une quelconque des revendications 1 à 3.

5. Pneumatique neige moulé et vulcanisé à partir d'un moule selon la revendication 4.

## Patentansprüche

1. Formelement für ein Formwerkzeug für einen Reifen, der einen mit einer Vielzahl von Blöcken versehenen Laufstreifen aufweist, wobei jeder Block eine Kontaktfläche aufweist, die dazu bestimmt ist, beim Rollen mit einer Straße in Kontakt zu kommen, wobei das Formelement eine Formfläche (5) zum Formen der Kontaktflächen der Blöcke aufweist, wobei die Formfläche eine Vielzahl von Rippen (7) enthält, die dazu bestimmt sind, dünne Rillen in den Blöcken zu formen, wobei die Rippen eine Höhe (H) zwischen 0,005 und 1 mm und eine Breite (L) zwischen 0,01 mm und 0,3 mm haben, wobei die Teilung (P) der Rippen zwischen 0,1 und 2 mm liegt, **dadurch gekennzeichnet, dass** die Formfläche mindestens eine Messzone (9) ohne Rippen aufweist, die Messeinrichtungen aufnehmen kann, und dass die Messzone global die Form einer Scheibe hat, deren Durchmesser größer als 3 mm ist.

2. Formelement nach Anspruch 1, wobei das Formelement zwei Ränder (11) aufweist, die die Formfläche in Umfangsrichtung begrenzen, wobei jeder der Ränder mit einem Rand eines anderen Formelements in Kontakt kommen kann, **dadurch gekennzeichnet, dass** die Mitte der Messzone (9) höchstens 15 mm von einem der Ränder entfernt ist.

3. Formelement für ein Formwerkzeug für einen Reifen, der einen mit einer Vielzahl von Blöcken versehenen Laufstreifen aufweist, wobei jeder Block eine Kontaktfläche aufweist, die dazu bestimmt ist, beim Rollen mit einer Straße in Kontakt zu kommen, wobei das Formelement eine Formfläche (5) zum Formen der Kontaktflächen der Blöcke aufweist, wobei die Formfläche eine Rauigkeit (Ra) zwischen 0,005 mm und 0,02 mm hat, **dadurch gekennzeichnet, dass** die Formfläche mindestens eine Messzone (9) aufweist, die Messeinrichtungen aufnahmen kann, wobei die Messzone global die Form einer Scheibe hat, deren Durchmesser größer als 3 mm ist, und dass die Messzone eine Rauigkeit (Ra) zwischen 0,002 mm und 0,003 mm hat.

4. Formwerkzeug zur Vulkanisierung und zum Formen eines Reifens, **dadurch gekennzeichnet, dass** das Formwerkzeug mindestens ein Formelement (1) nach einem der Ansprüche 1 bis 3 aufweist.

5. Winterreifen, der ausgehend von einem Formwerkzeug nach Anspruch 4 geformt und vulkanisiert wird.

## Claims

1. Moulding element for a mould for a tyre comprising a tread provided with a plurality of blocks, each block comprising a contact surface intended to come into contact with a road surface during running, the said moulding element comprising a moulding surface (5) for moulding the contact surfaces of the blocks, the said moulding surface comprising a plurality of ribs (7) intended to mould fine grooves in the blocks, the said ribs having a height (H) of between 0.005 and 1 mm and a width (L) of between 0.01 mm and 0.3 mm, the pitch (P) of the ribs being between 0.1 and 2 mm, **characterized in that** the moulding surface comprises at least one rib-free measurement zone (9) able to accept measurement means, and **in that** the measurement zone has the overall shape of a disc the diameter of which is greater than 3 mm.

2. Moulding element according to Claim 1, the said moulding element comprising two edges (11) circumferentially delimiting the moulding surface, each of the said edges being able to come into contact with an edge of another moulding element, **characterized in that** the centre of the measurement zone (9) is distant from one of the said edges by 15 mm at most.

3. Moulding element for a mould for a tyre comprising a tread provided with a plurality of blocks, each block comprising a contact surface intended to come into contact with a road surface during running, the said moulding element comprising a moulding surface (5) for moulding the contact surfaces of the blocks, the said moulding surface having a roughness (Ra) of between 0.005 mm and 0.02 mm, **characterized in that** the moulding surface comprises at least one measurement zone (9) able to accept measurement means, the said measurement zone having the overall shape of a disc the diameter of which is greater than 3 mm, and **in that** the measurement zone has a roughness (Ra) of between 0.002 mm and 0.003 mm.

4. Mould for vulcanizing and moulding a tyre, **characterized in that** the said mould comprises at least one moulding element (1) according to any one of Claims 1 to 3.

5. Snow tyre moulded and vulcanized using a mould according to Claim 4.
